# EUROPÄISCHE PATENTSCHRIFT

(11) **EP 1 422 095 B1**
(45) Veröffentlichungstag und Bekanntmachung des Hinweises auf die Patenterteilung: **30.09.2009**
(21) Anmeldenummer: 03025287.8
(22) Anmeldetag: 06.11.2003
(51) Int. Cl.: B60J 5/04, B60J 10/04

(54) **Fensterschacht-Abdeckvorrichtung**
Window channel covering structure
Couvercle de canal de guidage pour fenêtres

(30) Priorität: 22.11.2002 DE 20218156 U
(43) Veröffentlichungstag der Anmeldung: 26.05.2004
(73) Patentinhaber: Süddeutsche Aluminium Manufaktur GmbH, 89558 Böhmenkirch (DE)
(72) Erfinder: Schabel, Wolfgang, 73113 Ottenbach (DE); Binder, Hans, 89558 Böhmenkirch (DE)
(74) Vertreter: Grosse, Rainer

(56) Entgegenhaltungen:
- EP-A- 0 401 090
- EP-A- 0 739 770
- FR-A- 2 061 226
- US-A- 6 128 859

## Beschreibung

Die Erfindung betrifft eine Fensterschacht-Abdeckung für Fahrzeugfenster, insbesondere an Fahrzeugtüren, mit einer profilierten Fensterschachtleiste, in der zumindest ein Befestigungsabschnitt eines elastischen Fensterscheiben-Dichtelements aufgenommen ist. Eine solche Abdeckung ist in der US-A-612 859 (VANCE) beschreiben.

Derartige Fensterschacht-Abdeckvorrichtungen sind bei Fahrzeugen, insbesondere an Türen von Kraftfahrzeugen, bekannt. Die Fensterschachtleiste ist im oberen Bereich eines Fensterschachts außen an einer Fahrzeugtür angeordnet, wobei der Fensterschacht die Glasscheibe aufnimmt, wenn diese zum Öffnen des Fahrzeugfensters heruntergefahren wird. Die Fensterschachtleiste nimmt zumindest einen Befestigungsabschnitt eines elastischen Fensterscheiben-Dichtelements auf, das an der Fensterscheibe anliegt und ein Eindringen von Schmutz und Feuchtigkeit in den Fensterschacht weitestgehend verhindert.

Bei der bekannten Fensterschacht-Abdeckvorrichtung besteht endseitig der Fensterschachtleiste der Nachteil, dass das Fensterscheiben-Dichtgummi das Innere der profilierten Fensterschachtleiste nicht vollständig ausfüllt und demzufolge scharfkantige Zonen, insbesondere Randbereiche, der Fensterschachtleiste, die vorzugsweise aus Metall, insbesondere aus Aluminium, besteht eine Verletzungsgefahr für die Benutzer des Fahrzeugs bilden. Dies ist insbesondere dann gegeben, wenn die Fensterschacht-Abdeckvorrichtung die Fahrzeugtür in Richtung der sogenannten B-Säule des Fahrzeugs überragt und demzufolge einen Vorsprung an der Tür bildet. Dieses Überragen der B-Säule führt zwar zu einem durchgehenden Bild bei dem Verlauf der Fensterschachtleiste, das heißt, sie erstreckt sich über die gesamte Vordertür des Fahrzeugs und ein Teil über die B-Säule. Bei der hinteren Tür (Fondtür) überragt die Fensterschachtleiste die Tür im Scharnierbereich, um die genannte B-Säule ebenfalls teilweise abzudecken. Vorzugsweise ist vorgesehen, dass jede der beiden Fensterschachtleisten der Vorder- und Hintertür die B-Säule etwa hälftig abdeckt, so dass zwischen diesen beiden nur eine geringe Trennfuge besteht und der optische Eindruck einer durchlaufenden Fensterschachtleiste entsteht.

Aufgabe der Erfindung ist es daher, eine Fensterschacht-Abdeckvorrichtung zu schaffen, die keine Verletzungsgefahr mit sich bringt und ferner einen hohen Fertigungs- und Qualitätsstandard besitzt.

Diese Aufgabe wird erfindungsgemäß gelöst durch ein, in einen leistenendseitigen, zwischen Fensterscheiben-Dichtelement und Fensterschachtleiste ausgebildeten Freiraum eingesetztes Füllstück. Dieses Füllstück führt dazu, dass die Fensterschachtleiste im Innern ihrer profilierten Formgebung endseitig ohne Ausbildung eines Freiraums oder nur eines sehr geringen Freiraums ausgestaltet ist, da dieser Freiraum von dem genannten Füllstück zumindest teilweise oder vollständig aufgefüllt wird. Die Folge ist, dass das Füllstück etwaige scharfkantige Randbereiche und Eckbereiche der Fensterschachtleiste abdeckt oder bis an diese Zonen herangeführt ist, so dass insbesondere bei einer Berührung der Fensterschachtleiste von hinten keine Verletzungsgefahr besteht. Diese Berührung von hinten ist insbesondere dann möglich, wenn die Fensterschachtleiste über die Fahrzeugtür hinausragt und sich die Fahrzeugtür im geöffneten Zustand befindet.

Nach einer Weiterbildung der Erfindung ist vorgesehen, dass das Füllstück an der Fensterschachtleiste befestigt ist. Dieses sichert die Unverlierbarkeit, wobei die Befestigung als Rastbefestigung und/oder Klemmbefestigung und/oder Klebebefestigung ausgebildet sein kann.

Nach einer weiteren Ausführungsform der Erfindung ist vorgesehen, dass die Fensterschachtleiste eine endseitige Stirnwand aufweist, und dass das Füllstück zumindest im Freiraum zwischen der Stirnwand und dem zugeordneten Ende des Fensterscheiben-Dichtelements, insbesondere dem Ende einer Dichtlippenanordnung des Fensterscheibendichtelements, angeordnet ist.

Ferner ist es vorteilhaft, wenn die Fensterschachtleiste eine Haltelasche für das Fensterscheiben-Dichtelement aufweist und dass die Haltelasche das Füllstück festhält oder mit festhält. Das elastische Fensterscheiben-Dichtelement besteht vorzugsweise aus Gummi oder gummiähnlichem Material und wird in der Fensterschachtleiste eingeklemmt. Es kann eine Metalleinlage aufweisen. Zur Klemmhalterung, die durch Klebung unterstützt sein kann, dient die genannte Haltelasche. Es können über die Länge der Fensterschachtleiste auch mehrere Haltelaschen vorgesehen sein. Bevorzugt übernimmt diese Haltelasche eine weitere Haltefunktion, indem sie nicht nur das Fensterscheiben-Dichtelement hält, sondern auch das Füllstück. Alternativ kann jedoch auch vorgesehen sein, dass das Füllstück einen Freischnitt aufweist, also so geformt ist, dass in dem Freischnitt die Haltelasche aufgenommen wird, ohne dass die Haltelasche eine Haltewirkung auf das Füllstück entfaltet. Dies ist insbesondere dann der Fall, wenn das Füllstück in die Fensterschachtleiste eingeklebt wird.

Nach einer bevorzugten Ausführungsform ist vorgesehen, dass der untere Eckbereich der Fensterschachtleiste innenseitig von dem Füllstück oder einem Abschnitt von diesem zur Ausbildung eines Verletzungsschutzes abgedeckt ist. Besonders verletzungsgefährdend ist der untere Eckbereich einer vorstehenden Fensterschachtleiste, der aufgrund des erfindungsgemäßen Füllstückes derart im Innern der Fensterschachtleiste abgedeckt wird oder an den das Füllstück derart heranragt, dass der Randbereich und der Eckbereich der blechartigen Fensterschachtleiste nicht mehr scharfkantig vorsteht.

Weitere vorteilhafte Ausgestaltungen der Erfindung ergeben sich aufgrund der weiteren Unteransprüche.

Die Zeichnungen veranschaulichen die Erfindung anhand eines Ausführungsbeispiels, und zwar zeigt:
- Figur 1: eine Fahrzeugtür in schematischer Darstellung,
- Figur 2: einen endseitigen Bereich einer Fensterschacht-Abdeckvorrichtung ohne eingesetztes Füllstück,
- Figur 3: die Darstellung der Figur 2 mit eingesetztem Füllstück,
- Figur 4: eine perspektivische Ansicht des Füllstücks nach einem ersten Ausführungsbeispiel und
- Figur 5: eine perspektivische Ansicht des Füllstücks nach einem weiteren Ausführungsbeispiel.

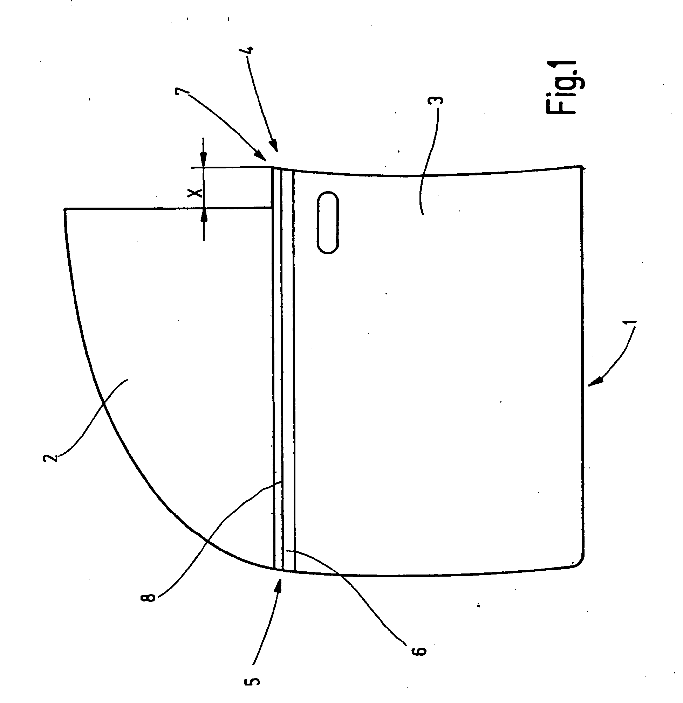

Die Figur 1 zeigt eine Fahrzeugtür 1 eines Fahrzeugs, insbesondere eines Kraftfahrzeugs, die eine versenkbare Fensterscheibe 2 sowie ein Blech-Türblatt 3 aufweist. Die Übergangszone 4 zwischen Fensterscheibe 2 und Blech-Türblatt 3 ist -von außen her- mittels einer Fensterschacht-Abdeckvorrichtung 5 abgedeckt.

Die Fensterschacht-Abdeckvorrichtung 5 weist eine Fensterschachtleiste 6 auf, die profiliert ist, aus Metall, insbesondere Aluminium, besteht und sich über die gesamte Längserstreckung der Fahrzeugtür erstreckt. Da -wie aus der Figur 1 ersichtlich- die Fensterscheibe 2 eine geringere Breite als das Blech-Türblatt 3 aufweist, überragt die Fensterschacht-Abdeckvorrichtung 5 die Fensterscheibe 2 um ein Maß x, wodurch -bei geöffneter Tür- eine verletzungsgefährdete Eckzone 7 gebildet wird. Der Fensterschachtleiste 6 ist ein Fensterscheiben-Dichtelement 8 zugeordnet, derart, dass dieses -aus elastischem Material bestehend- zwischen Fensterschachtleiste 6 und Fensterscheibe 2 liegt und dabei mehr oder weniger dichtend an der Oberfläche der Fensterscheibe 2 anliegt, um das Eindringen von Feuchtigkeit und Schmutz in das Innere des Blech-Türblatts 3, insbesondere in den dort ausgebildeten Fensterschacht, zu verhindern. Beim Herunterfahren der Fensterscheibe 2 streift das Fensterscheiben-Dichtelement 8 an der Außenseite der Fensterscheibe 2 entlang und verhindert dadurch, dass auf der Scheibe befindliche Feuchtigkeit in den Fensterschacht gelangt.

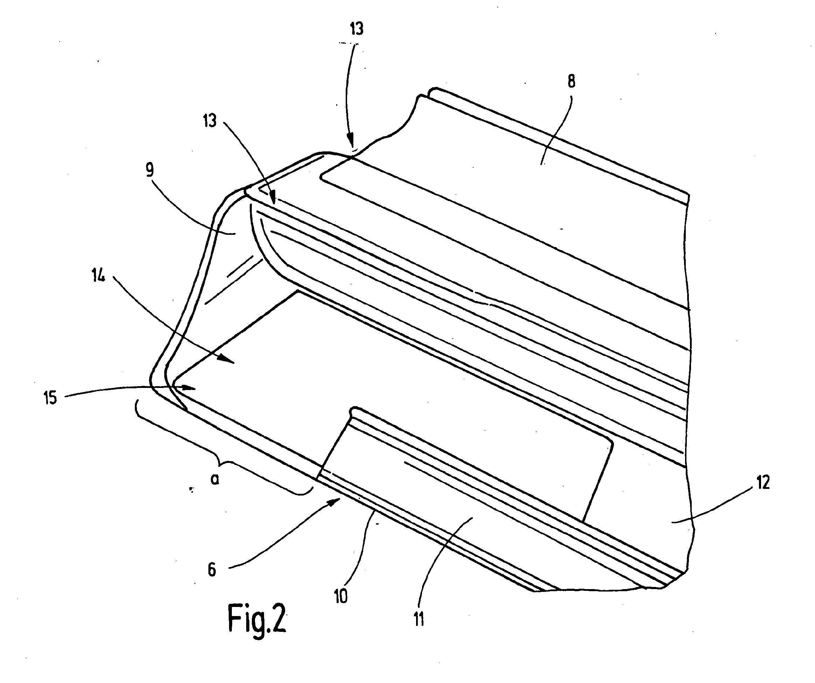

Gemäß Figur 2, die die Eckzone 7 in einer Ansicht von unten und hinten, also von der Fahrgastzelle aus, zeigt, wird deutlich, dass die Fensterschachtleiste 6 profilartig, nach Art eines C-Profils, ausgestaltet ist und endseitig eine Stirnwand 9 aufweist. Diese besitzt etwa eine Dreiecksform. Am unteren Rand 10 der Fensterschachtleiste 6 befindet sich eine Haltelasche 11, die sich nicht bis zur Stirnwand 9 erstreckt, sondern hiervon einen Abstand a aufweist. Die Haltelasche 11, die einstückig an der Fensterschachtleiste 6 ausgebildet ist, dient dazu, das Fensterscheiben-Dichtelement 8 aufzunehmen und zu halten. Hierzu weist das Fensterscheiben-Dichtelement 8 einen Befestigungsabschnitt 12 auf, der vorzugsweise hinter die Haltelasche 11 gerastet oder dort eingeklemmt ist. Im oberen Kantenbereich 13 ist die Fensterschachtleiste 6 hakenförmig gestaltet und hintergreift dort den Befestigungsabschnitt 12. Ferner besitzt das Fensterscheiben-Dichtelement 8 mehrere Dichtlippen 13 zur Anlage an der Fensterscheibe 2.

Wie aus der Figur 2 erkennbar, reicht das Fensterscheiben-Dichtelement 8, insbesondere sein Befestigungsabschnitt 12, leistenendseitig nicht bis zum Rand 10 und auch nicht bis zur Stirnwand 9, so dass in diesen genannten Zonen ein Freiraum 14 ausgebildet ist. Insbesondere ist die innere Eckzone 15 der Fensterschachtleiste 6 völlig freiliegend und daher durch den meist relativ scharfkantigen Rand und die exponierte Stellung verletzungsgefährdend, das heißt, insbesondere aussteigende Personen können hinter diese Zone haken und sich dabei verletzen.

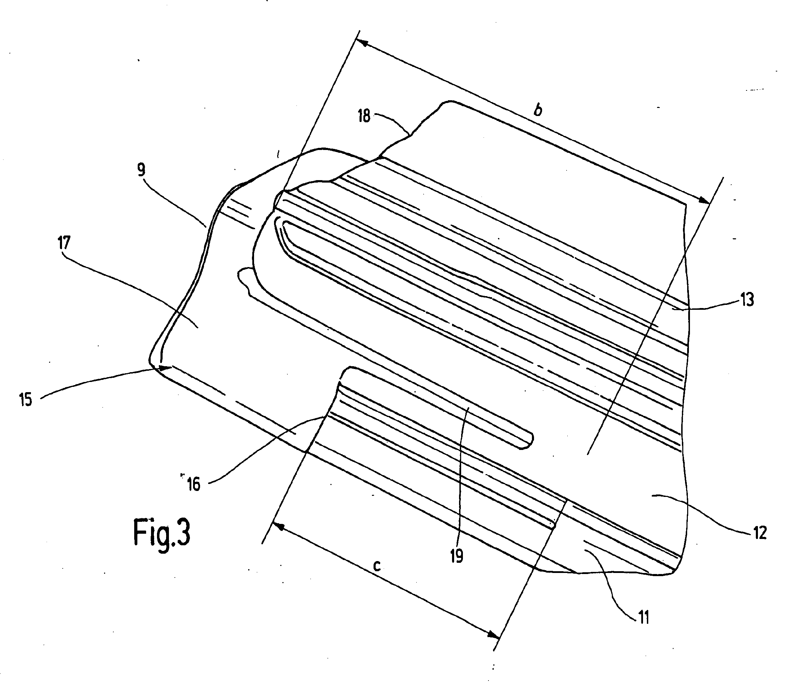

Gemäß Figur 3 ist erfindungsgemäß vorgesehen, dass sich der Befestigungsabschnitt 12 nicht bis auf Höhe der Stirnenden 18 der Dichtlippen 13 erstreckt, sondern dass zwischen den genannten Elementen ein Rücksprung b besteht. Dies hat zur Folge, dass sich der Befestigungsabschnitt 12 nicht bis zur Endkante 16 der Haltelasche 11 erstreckt, sondern dass dort ein Abstand c besteht. Auch insoweit reicht der Freiraum 14 also bis in diese Zone der Länge c hinein.

Zur Ausfüllung des Freiraums 14, also des hinteren Inneren der profilartigen Fensterschachtleiste 6 in der Eckzone 7 ist ein vorzugsweise aus Kunststoff gefertigtes, elastisches oder auch nicht elastisches Füllstück 17 gemäß Figur 3 vorgesehen, das zum einen den Abstand zwischen den Stirnenden 18 der Dichtlippen 13 des Fensterscheiben-Dichtelements 8 und der Innenseite der Stirnwand 9 ausfüllt und ferner sich bis in die Eckzone 15 erstreckt, wobei dort der Verlauf von der Stirnwand 9 bis zur Endkante 16 der Haltelasche 11 erfolgt.

Ferner weist das Füllstück 17 einen Bereich 19 auf, der die Haltelasche 11 übergreift, so dass also der gesamte, dort ausgebildete Freiraum 14 zumindest teilweise, auf jeden Fall aber so, dass keine Verletzungsgefahr an den relativ scharfkantigen Rändern der Fensterschachtleiste 6 besteht, ausgefüllt ist.

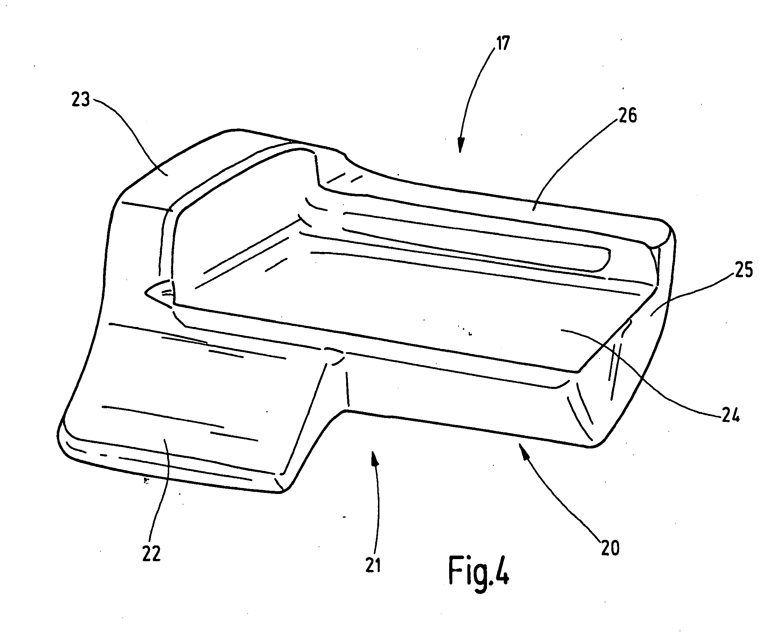

Die Figur 4 zeigt eine perspektivische Ansicht eines Füllstücks 17, so wie es aus der Figur 3 ersichtlich ist. Das Füllstück 17 weist eine Unterseite 20 auf, die der C-profilartigen Formgebung der Fensterschachtleiste 6 angepasst ist. Es besitzt ferner einen Freischnitt 21, der von einer Zunge 22 nach vorne hin überragt wird. Der Freischnitt 21 dient -gemäß Figur 3- zur Aufnahme der Haltelasche 11, das heißt, das Füllstück 17 der Figur 4 wird nicht von der Haltelasche 11 gehalten. Randseitig weist das Füllstück 17 eine Füllwand 23 auf, die -im eingesetzten Zustand gemäß Figur 3- in den Bereich des Freiraums 14 eingreift, der zwischen der Stirnwand 18 der Dichtlippen 13 und der Innenseite der Stirnwand 9 der Fensterschachtleiste 6 liegt. Die Zunge 22 füllt die Eckzone 15 aus. Ein Grundkörperbereich 24 des Füllstücks 17 der Figur 4 greift in einen Bereich des Freiraums 14, der zwischen der Fensterschachtleiste 6 und den Dichtlippen 13 liegt. Ferner grenzt der Grundkörperbereich 24 mit seiner Stirnseite 25 an die entsprechende Stirnseite des Befestigungsabschnitts 12 an. Mit einem Haltesteg 26, der von dem Grundkörperbereich 24 nach oben hin ausgeht und mit der Füllwand 23 verbunden ist, erfolgt ein Hintergriff an der Hinterseite der Dichtlippen 13. Insgesamt wird deutlich, dass das Füllstück 17 sicher und entsprechend randabdeckend an der Fensterschachtleiste 6 befestigbar ist. Für die Befestigung kann eine Klebung und/oder Rastung und/oder Klemmung vorgesehen sein.

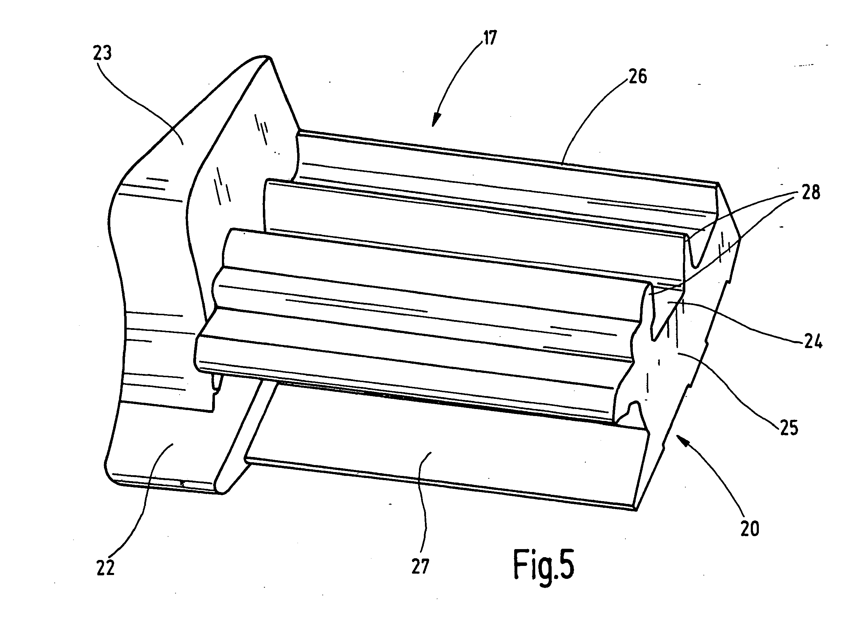

Die Figur 5 zeigt ein weiteres Ausführungsbeispiel eines Füllstücks 17, das im Wesentlichen so ausgestaltet ist wie das Füllstück nach dem Ausführungsbeispiel der Figur 4. Es soll daher nachstehend nur auf die Unterschiede eingegangen werden. Das Füllstück 17 der Figur 5 weist keinen Freischnitt 21, sondern an dessen Stelle eine Befestigungszunge 27 auf, die -im eingesetzten Zustand- hinter die Haltelasche 11 greift und daher der Befestigung des Füllstücks 17 an der Fensterschachtleiste 6 dient. Ferner ist die Breite der Zunge 22 beim Ausführungsbeispiel der Figur 5 kleiner als beim Ausführungsbeispiel der Figur 4. Dies hat zur Folge, dass sich die Haltelasche 11 bis dichter an die Stirnwand 9 der Fensterschachtleiste 6 heran erstrecken kann. Ferner weist der Grundkörperbereich 24 auf seiner Oberseite Profilrippen 28 auf, die einer entsprechenden Profilierung am Befestigungsabschnitt 12 des Fensterscheiben-Dichtelements 8 entsprechen. Das Einsetzen des Füllstücks 17 der Figur 5 erfolgt in entsprechender Weise wie das Einsetzen des Füllstücks 17 der Figur 4, wobei jedoch die Befestigungszunge 27 von der Haltelasche 11 beaufschlagt ist und daher ein extrem sicherer Halt gewährleistet wird.

## Patentansprüche

1. Fensterschacht-Abdeckvorrichtung für Fahrzeugfenster, insbesondere an Fahrzeugtüren, mit einer profilierten Fensterschachtleiste, in der zumindest ein Befestigungsabschnitt eines elastischen Fensterscheiben-Dichtelements aufgenommen ist, **gekennzeichnet durch** ein, in einen leistenendseitigen, zwischen Fensterscheiben-Dichtelement (8) und Fensterschachtleiste (6) ausgebildeten Freiraum (14) eingesetztes Füllstück (17).

2. Fensterschacht-Abdeckvorrichtung nach Anspruch 1, **dadurch gekennzeichnet, dass** das Füllstück (17) an der Fensterschachtleiste (6) befestigt ist.

3. Fensterschacht-Abdeckvorrichtung nach Anspruch 2, **dadurch gekennzeichnet, dass** die Befestigung eine Rastbefestigung und/oder eine Klemmbefestigung und/oder eine Klebebefestigung ist.

4. Fensterschacht-Abdeckvorrichtung nach einem der vorhergehenden Ansprüche, **dadurch gekennzeichnet, dass** die Fensterschachtleiste (6) eine endseitige Stirnwand (9) aufweist, und dass das Füllstück (17) zumindest im Freiraum (14) zwischen der Stirnwand (9) und dem zugeordneten Ende des Fensterscheiben-Dichtelements (8), insbesondere dem Ende einer Dichtlippenanordnung (13) des Fensterscheiben-Dichtelements (8), angeordnet ist.

5. Fensterschacht-Abdeckvorrichtung nach einem der vorhergehenden Ansprüche, **dadurch gekennzeichnet, dass** die Fensterschachtleiste (6) mindestens eine Haltelasche (11) für das Fensterscheiben-Dichtelement (8) aufweist, und dass die Haltelasche (11) das Füllstück (17) festhält oder mit festhält.

6. Fensterschacht-Abdeckvorrichtung nach einem der vorhergehenden Ansprüche, **dadurch gekennzeichnet, dass** die Haltelasche (11) zur Stirnwand (9) der Fensterschachtleiste (6) einen Abstand aufweist, wobei der durch diesen Abstand gebildete Bereich des Freiraums (14) von dem Füllstück (17) teilweise oder im Wesentlichen ausgefüllt ist.

7. Fensterschacht-Abdeckvorrichtung nach einem der vorhergehenden Ansprüche, **dadurch gekennzeichnet, dass** das Füllstück (17) der Kontur der Fensterschachtleiste (6) und/oder der Kontur des Fensterscheiben-Dichtelements (8) angepasst ist.

8. Fensterschacht-Abdeckvorrichtung nach einem der vorhergehenden Ansprüche, **dadurch gekennzeichnet, dass** die Fensterschachtleiste (6) im Querschnitt im Wesentlichen als C-Profil ausgebildet ist.

9. Fensterschacht-Abdeckvorrichtung nach einem der vorhergehenden Ansprüche, **dadurch gekennzeichnet, dass** das Füllstück (17) aus festem oder elastischem Material, insbesondere aus Kunststoff, besteht.

10. Fensterschacht-Abdeckvorrichtung nach einem der vorhergehenden Ansprüche, **dadurch gekennzeichnet, dass** das Fensterscheiben-Dichtelement (8), insbesondere sein Befestigungsabschnitt (12), einen Abstand zur Stirnwand (9) der Fensterschachtleiste (6) aufweist, wobei der durch diesen Abstand gebildete Bereich des Freiraums (14) von dem Füllstück (17) teilweise oder im Wesentlichen ausgefüllt ist.

11. Fensterschacht-Abdeckleiste nach einem der vorhergehenden Ansprüche, **dadurch gekennzeichnet, dass** die untere Eckzone (15) der Fensterschachtleiste (6) innenseitig von dem Füllstück (17) oder einem Abschnitt von diesem zur Ausbildung eines Verletzungsschutzes abgedeckt wird.

## Claims

1. Window channel covering structure for vehicle windows, in particular on vehicle doors, with a profiled window channel strip in which at least one fastening portion of a resilient window pane sealing element is received, **characterized by** a filling piece (17) inserted into a strip end-side free space (14) formed between the window pane sealing element (8) and window channel strip (6).

2. Window channel covering structure according to claim 1, **characterized in that** the filling piece (17) is fastened to the window channel strip (6).

3. Window channel covering structure according to claim 2, **characterized in that** the fastening is a locking fastening and/or a clamping fastening and/or an adhesive fastening.

4. Window channel covering structure according to one of the preceding claims, **characterized in that** the window channel strip (6) has an end-side front wall (9), and **in that** the filling piece (17) is arranged at least in the free space (14) between the front wall (9) and the associated end of the window pane sealing element (8), in particular the end of a sealing lip arrangement (13) of the window pane sealing element (8).

5. Window channel covering structure according to one of the preceding claims, **characterized in that** the window channel strip (6) has at least one retaining tab (11) for the window pane sealing element (8), and **in that** the retaining tab (11) secures or jointly secures the filling piece (17).

6. Window channel covering structure according to one of the preceding claims, **characterized in that** the retaining tab (11) is at a spacing from the front wall (9) of the window channel strip (6), the region of the free space (14) that is formed by this spacing being partly or substantially filled out by the filling piece (17).

7. Window channel covering structure according to one of the preceding claims, **characterized in that** the filling piece (17) is adapted to the contour of the window channel strip (6) and/or to the contour of the window pane sealing element (8).

8. Window channel covering structure according to one of the preceding claims, **characterized in that** the window channel strip (6) is embodied in cross section substantially as a C-shaped profile.

9. Window channel covering structure according to one of the preceding claims, **characterized in that** the filling piece (17) is made of solid or resilient material, in particular of plastics material.

10. Window channel covering structure according to one of the preceding claims, **characterized in that** the window pane sealing element (8), in particular its fastening portion (12), is at a spacing from the front wall (9) of the window channel strip (6), the region of the free space (14) that is formed by this spacing being partly or substantially filled out by the filling piece (17).

11. Window channel covering strip according to one of the preceding claims, **characterized in that** the lower corner zone (15) of the window channel strip (6) is covered on the inside by the filling piece (17) or a portion thereof to form an injury protection means.

## Revendications

1. Dispositif de recouvrement de logement de vitre pour fenêtres de véhicules automobiles, en particulier sur des portières de véhicules, comprenant une baguette profilée de logement de vitre, dans laquelle est logé au moins un segment de fixation d'un élément d'étanchéité élastique de vitre de fenêtre, **caractérisé par** une pièce de garnissage (17) insérée dans un espace libre (14) situé du côté extrémité de la baguette, formé entre élément d'étanchéité de vitre de fenêtre (8) et baguette de logement de vitre (6).

2. Dispositif de recouvrement de logement de vitre selon la revendication 1, **caractérisé en ce que** la pièce de garnissage (17) est fixée sur la baguette de logement de vitre (6).

3. Dispositif de recouvrement de logement de vitre selon la revendication 2, **caractérisé en ce que** la fixation est une fixation par enclenchement et/ou une fixation par serrage et/ou une fixation par collage.

4. Dispositif de recouvrement de logement de vitre selon l'une des revendications précédentes, **caractérisé en ce que** la baguette de logement de vitre (6) présente une paroi frontale du côté extrémité (9), et que la pièce de garnissage (17) est disposée au moins dans l'espace libre (14) entre la paroi frontale (9) et l'extrémité associée de l'élément d'étanchéité de vitre de fenêtre (8), en particulier l'extrémité d'un agencement de lèvres d'étanchéité (13) de l'élément d'étanchéité de la vitre de fenêtre (8).

5. Dispositif de recouvrement de logement de vitre selon l'une des revendications précédentes, **caractérisé en ce que** la baguette de logement de vitre (6) présente au moins une patte de retenue (11) pour l'élément d'étanchéité de vitre de fenêtre (8) et que la patte de retenue (11) maintient la pièce de garnissage (17) ou participe au maintien de celle-ci.

6. Dispositif de recouvrement de logement de vitre selon l'une des revendications précédentes, **caractérisé en ce que** la patte de retenue (11) présente un écart par rapport à la paroi frontale (9) de la baguette de logement de vitre (6), la zone de l'espace libre (14) formée par cet écart étant remplie partiellement ou essentiellement par la pièce de garnissage (17).

7. Dispositif de recouvrement de logement de vitre selon l'une des revendications précédentes, **caractérisé en ce que** la pièce de garnissage (17) est adaptée au contour de la baguette de logement de vitre (6) et/ou au contour de l'élément d'étanchéité de vitre de fenêtre (8).

8. Dispositif de recouvrement de logement de vitre selon l'une des revendications précédentes, **caractérisé en ce que** la baguette de logement de vitre (6) est réalisée, en coupe transversale, essentiellement sous la forme de profil en C.

9. Dispositif de recouvrement de logement de vitre selon l'une des revendications précédentes, **caractérisé en ce que** la pièce de garnissage (17) est réalisée dans un matériau rigide ou élastique, en particulier en matière plastique.

10. Dispositif de recouvrement de logement de vitre selon l'une des revendications précédentes, **caractérisé en ce que** l'élément d'étanchéité de vitre de fenêtre (8), en particulier son segment de fixation (12), présente un écart par rapport à la paroi frontale (9) de la baguette de logement de vitre (6), la zone de l'espace libre (14) formée par cet écart étant remplie partiellement ou essentiellement par la pièce de garnissage (17).

11. Baguette de recouvrement de logement de vitre selon l'une des revendications précédentes, **caractérisée en ce que** la zone d'angle inférieure (15) de la baguette de logement de vitre (6) est recouverte du côté intérieur par la pièce de garnissage (17) ou un segment de celle-ci pour former une protection contre les blessures.
